Europäisches Patentamt

European Patent Office

Office européen des brevets

(19)

(11) Veröffentlichungsnummer: **0 124 769**
**B1**

(12) **EUROPÄISCHE PATENTSCHRIFT**

(45) Veröffentlichungstag der Patentschrift:
**10.08.88**

(21) Anmeldenummer: **84103712.0**

(22) Anmeldetag: **04.04.84**

(51) Int. Cl.⁴: **F 24 J 2/28**

(54) **Empfänger für Sonnenenergie.**

(30) Priorität: **09.05.83 CH 2515/83**

(43) Veröffentlichungstag der Anmeldung:
**14.11.84 Patentblatt 84/46**

(45) Bekanntmachung des Hinweises auf die Patenterteilung:
**10.08.88 Patentblatt 88/32**

(84) Benannte Vertragsstaaten:
**DE FR GB IT**

(56) Entgegenhaltungen:
**FR-A-2 491 599**
**US-A-3 981 151**
**US-A-4 318 393**
**US-A-4 394 859**

(73) Patentinhaber: **GEBRÜDER SULZER AKTIENGESELLSCHAFT, Zürcherstrasse 9, CH-8401 Winterthur (CH)**

(72) Erfinder: **Fricker, Hans, Breitestrasse 22 Sulz, CH-8544 Rickenbach- Attikon (CH)**

(74) Vertreter: **Dipl.- Ing. H. Marsch Dipl.- Ing. K. Sparing Dipl.- Phys.Dr. W.H. Röhl Patentanwälte, Rethelstrasse 123, D-4000 Düsseldorf (DE)**

EP 0 124 769 B1

## Beschreibung

Die Erfindung betrifft einen Empfänger für Sonnenenergie nach dem ersten Teil des Anspruchs 1.

Ein Empfänger dieser Art ist aus der US-A-3 981 151 bekannt. Bei diesem Empfänger besteht die wärmeabsorbierende Struktur aus einem Gitterwerk feuerfester Steine, die in Richtung der Luftströmung gegeneinander versetzt im Kanal angeordnet sind, so daß sich keine geraden Durchgänge für die Luftströmung ergeben. Eine derartige Absorberstruktur ist empfindlich gegen Temperaturänderungen, wie sie z.B. eintreten können, wenn keine Sonnenstrahlung mehr einfällt. Der bekannte Empfänger weist deshalb eine am Kanaleingang angelenkte Schwenktür auf, die bei Nichtscheinen der Sonne die Absorberstruktur gegen das Spiegelfeld abschirmt. Außerdem hat sich gezeigt, daß die konzentrierte Sonnenstrahlung nicht mit gleichmässiger Intensität über den Kanalquerschnitt einfällt, so daß die aus der Struktur austretende Luftunterschiedliche Temperaturen aufweist, was sich auf die anschließende Ausnützung der Sonnenwärme ungünstig auswirken kann.

Der Erfindung liegt die Aufgabe zugrunde, den Empfänger der eingangs genannten Art so zu verbessern, daß er höhere Lufttemperaturen bei geringerer mechanischer Beanspruchung erlaubt und daß unterschiedliche Temperaturen der aus der Absorberstruktur austretenden Luft ausgeglichen werden können.

Diese Aufgabe wird erfindungsgemäß durch die Merkmale des Kennzeichens des Anspruchs 1 gelöst. Die faserartige Struktur ist weniger empfindlich gegen Temperaturänderungen, die z.B. bei Ausfallen des Sonnenscheins auftreten können. Wegen dieser geringeren Empfindlichkeit bedarf es beim erf indungsgemässen Empfänger keiner Vorrichtung, die bei Ausfall der Sonnenstrahlung den Kanaleingang überdeckt. Dank den Drosselorganen ist es nunmehr möglich, unterschiedliche Lufttemperaturen am Austritt der Absorberstruktur, bedingt durch über den Kanalquerschnitt unterschiedliche Strahlenintensität, auszugleichen.

Aus der FR-A-2 491 599 ist eine Absorberstruktur bekannt, die aus lockerem, faserartigem, metallischem Material besteht, das in Form einer Hatte in einem Rahmen gefaßt ist. Die so gebildeten Strukturen sind in flache Kästen einschiebbar, die eine transparente Scheibe aufweisen, durch die die unkonzentrierte Sonnenstrahlung einfällt. Zum Abführen der absorbierten Wärme sind die Kästen von Luft durchströmt.

In den Ansprüchen 2 bis 7 sind verschiedene Ausführungsformen für die Drosselorgane angegeben. Diese Möglichkeiten bezwecken alle, daß die an der Struktur auftretende Höchsttemperatur die mittlere Endtemperatur der Luft möglichst wenig übersteigt.

Die Erfindung wird nun an Hand von in der Zeichnung schematisch dargestellten Ausführungsbeispielen näher erläutert. Es zeigen:

Fig. 1 eine Sonnenenergie-Empfängeranlage im Vertikalschnitt,

Fig. 2 einen im Vergleich zu Fig. 1 stark vergrösserten horizontalen Ausschnitt durch die Struktur des Absorbermaterials,

Fig. 3 eine grafische Darstellung des Verlaufs der Intensität der Strahlung, der Lufttemperatur sowie der Strukturtemperatur in Funktion der Strukturtiefe,

Fig. 4 bis 6 je einen Horizontalschnitt durch die Eintrittspartie eines Kanals,

Fig. 7 und 8 je einen Vertikalschnitt durch die Eintrittspartie eines Kanals und

Fig. 9 eine Anlage zum Umsetzen der Sonnenenergie in elektrischen Strom.

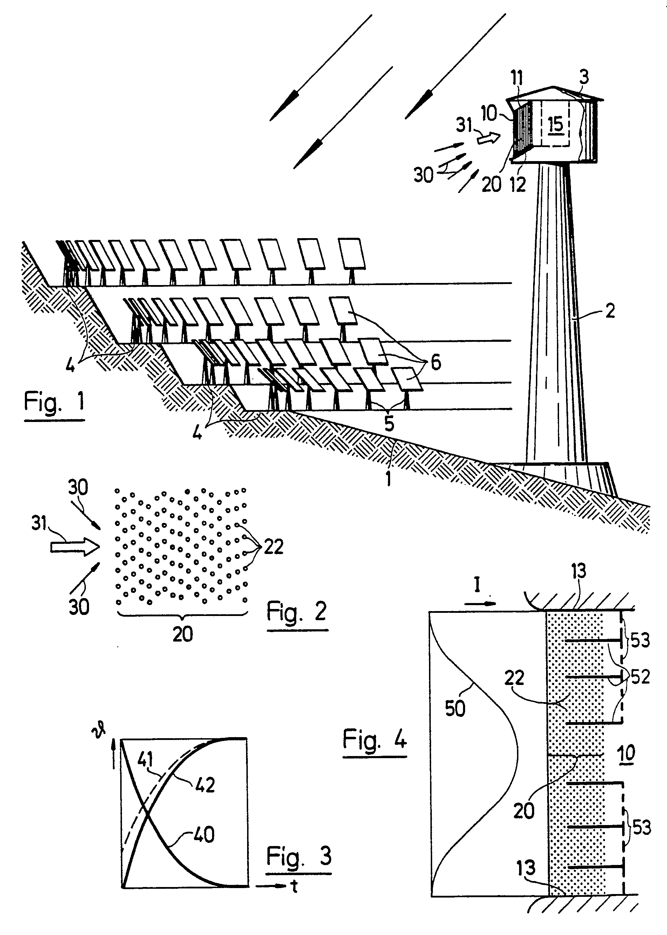

Nach Fig. 1 ist an einem konkaven Geländehang 1 ein Turm 2 mit einer Krone 3 angeordnet. Auf konzentrisch zum Turm 2 kreisbogenartig angeordneten Terassen 4 des Geländehangs 1 sind auf Böcken 5 quadratmetergroße Spiegel 6 drehbeweglich angeordnet. Diese Spiegel werden durch Servomotoren laufend so eingestellt, daß einfallende Sonnenstrahlung auf eine definierte Fläche am Eingang eines Kanals 10 in der Krone 3 reflektiert wird. Der Kanal 10 weist eine obere Kanalwand 11, eine untere Kanalwand 12 und zwei in Fig. 4 sichtbare seitliche Kanalwände 13 auf. Er führt zu gestrichelt angedeuteten Mitteln 15, die atmosphärische Luft durch den Kanal 10 hindurch ansaugen und über nicht gezeichnete Strömungsquerschnitte ausstossen.

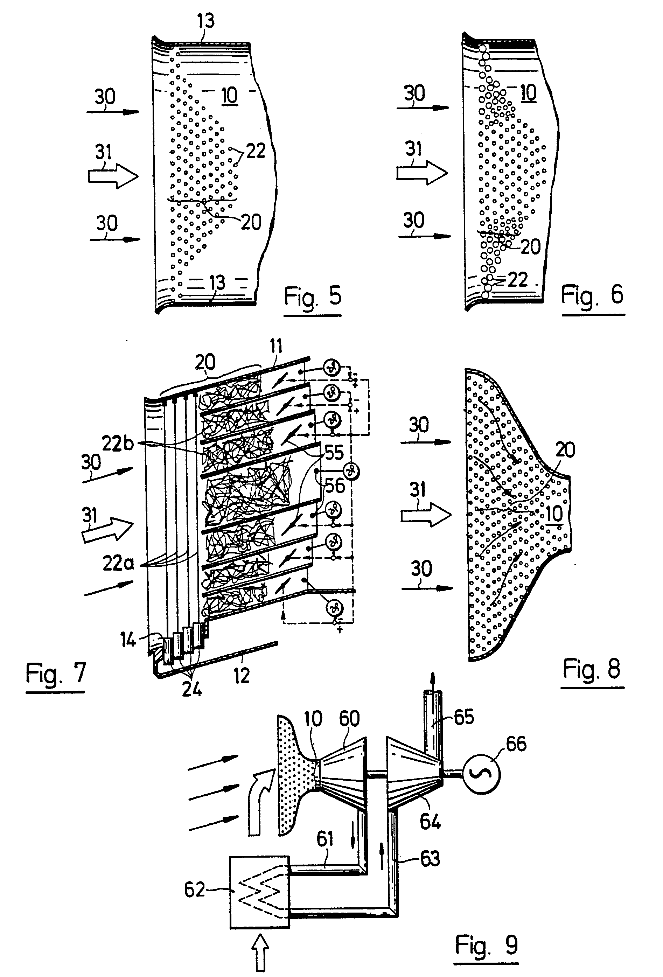

Im Eintritt des Kanals 10 ist eine lockere Struktur 20 von faserartigem Absorbermaterial angeordnet. Diese lockere Struktur 20 ist gemäß Fig. 2 aus vertikal hängenden Drähten 22 aus hitzebeständigern Metall von beispielsweise 1 mm Durchmesser gebildet. Die Drähte 22 sind an ihrem oberen Ende an der Kanalwand 11 befestigt und an ihrem unteren Ende tragen sie, nach Art eines Massependels, je ein zylinderförmiges Gewichtstück 24 (Fig. 7). Diese Gewichtstücke 24 bilden oberhalb der unteren Kanalwand 12 einen hängenden Boden. Gleichzeitig werden die Drähte 22 durch die Gewichtstücke 24, die sich gegenseitig seitlich berühren, voneinander distanziert. Die vorderste Reihe der Gewichtstücke 24 berührt einen Rand 14 der Kanalwand 12, der den Spalt zwischen dieser Wand und den Gewichtstücken 24 überbrückt.

Die Drähte 22 sind, wie Fig. 2 zeigt, gegeneinander versetzt angeordnet. Der Versatz ist jedoch nicht gleichmäßig, sondern derart gewählt, daß sich zwischen den Drähten keinerlei gerade durchgehende Gassen bilden. Die entsprechend den Pfeilen 30 auf die Struktur 20 auffallende Sonnenstrahlung kann somit in die Struktur eindringen, sie aber nicht durchdringen. Die Struktur 20 wird entsprechend dem Pfeil 31 von Luft durchströmt, die die Drähte 22 kühlt und sich dabei erhitzt.

In Fig. 3 zeigt die abfallende Kurve 40 den Verlauf der Intensität der in die Struktur eindringenden Sonnenstrahlung in Funktion der Strukturtiefe t. Die Intensität der eindringenden Strahlung nimmt asymptotisch ab. Sie wird an den Drähten 22 der Struktur 20 in Wärme umgesetzt, wodurch die Drähte 22 erhitzt werden. Mittels der durchgesaugten Luft wird von den Drähten 22 gleichzeitig Wärme abgeführt. Sie nehmen dabei eine Temperatur an, die im Mittel der Kurve 41 entspricht. Die Kurve 42 zeigt den Verlauf der mittleren Lufttemperatur in Funktion der Strukturtiefe t.

Gemäß Fig. 3 weisen die ersten Reihen der Drähte 22 eine verhältnismäßig tiefe Temperatur auf, weil sie von der hier noch kühlen Luft gut gekühlt werden. Entsprechend ist die Rückstrahlung seitens der Struktur in die Umgebung gering. Die Strahlungsabsorption des erfindungsgemäßen Empfängers ist daher sehr hoch. Für die ersten Drahtreihen kann daher Material geringerer Temperaturbeständigkeit verwendet werden als für die Drähte der später durchströmten Reihen. Fig. 3 zeigt auch, daß die Temperaturbelastung der Drähte im Rahmen der Maximaltemperatur der Luft bleibt und diese Temperatur nicht oder nur wenig übersteigt.

Die in Fig. 4 vor der Struktur 20 eingezeichnete Kurve 50 versinnbildlicht den Verlauf der Intensität I der einfallenden Sonnenstrahlung. Wegen der endlichen Ausdehnung der Sonne wie auch der Spiegel und zufolge der unvermeidlichen Streuung verläuft die einfallende Strahlung etwa nach einem Ausschnitt einer Sinuskurve. Um am Austritt der Struktur 20 eine möglichst gleichmässige Temperaturverteilung zu erreichen, ist die Struktur 20 im Beispiel nach Fig. 4 durch in Kanalrichtung verlaufende Wände 52 unterteilt. Die so gebildeten Teilkanäle sind durch Lochbleche 53, die unterschiedliche Öffnungsquerschnitte aufweisen, unterschiedlich gedrosselt. Der mittlere Teilkanal weist dabei kein Lochblech auf.

Die freien Querschnitte der Lochbleche 53 sind so gewählt, daß die auf den Strömungsquerschnitt bezogene Luftdurchflußmenge der auf den betreffenden Teilkanal einfallenden Strahlungsintensität proportional ist. Auf diese Weise werden die Temperaturunterschiede am Austritt der Struktur 20 über den Querschnitt des ganzen Kanals 10 klein gehalten. Die Unterteilung in Teilkanäle kann nicht nur in horizontaler Richtung, sondern analog auch in vertikaler Richtung erfolgen.

Gemäß Fig. 5 sind zur Vergleichmässigung der Austrittemperatur im Bereich der Kanalwände 13 die Abstände der Drähte 22 geringer als im mittleren Bereich des Kanals 10, so daß sich an den Randbereichen ein höherer Strömungswiderstand einstellt als im mittleren Bereich. Man kann dabei in Bereichen des Randes - auf die Breiteneinheit des Kanals bezogen - mit weniger Drähten auskommen als im mittleren Bereich des Kanals.

Um den Strömungswiderstand im Bereich der seitlichen Wände zu vergrößern, können dort auch dickere Drähte verwendet werden als im mittleren Bereich des Kanals 10, wie dies in Fig. 6 angedeutet ist.

In Fig. 7 ist die Struktur 20 aus vertikal hängenden Drähten 22a und Metallgestrick-Matten 22b zusammengesetzt. Die Matten 22b sind dabei an horizontalen Teilkanalwänden abgestützt. Abgesehen vom zentralen Teilkanal, weisen alle Teilkanäle verstellbare Drosselorgane 55 auf. Die hier als Drosselklappen ausgebildeten Drosselorgane 55 werden von stromunterhalb der Matten 22b angeordneten Temperaturfühlern 56 gesteuert, wobei die im zentralen Teilkanal gemessene Austrittstemperatur der Luft als Sollwert dient.

Nach Fig. 8 kann die Wand des Kanals 10 im Bereich der Struktur 20 auch trompetenförmig eingezogen sein, was ebenfalls zu einem Ausgleich der Endtemperatur führt.

Zweckmäßig wird dabei die seitliche und/oder die Tiefenteilung der Drähte oder Fasern in Strömungsrichtung der Luft vergrößert.

Der im Empfänger gebildete Heißluftstrom kann zu Prozeßzwecken verwendet werden. So kann beispielsweise ein pulverförmiges Material, das durch Wärmezufuhr chemisch verändert werden soll, in den Luftstrom eingebracht und aus diesem nach Wärmeaufnahme wieder ausgeschieden werden. Als Mittel, um die Luft durch die Struktur hindurchzufördern, kann dabei ein anschließendes Kamin dienen, in dem die heiße Luft einen Auftrieb erfährt. Der Prozeß läßt sich auch in einem solchen Kamin oder an seinem oberen Ende ausüben. Besonders günstig ist, wenn Teilchen des zu behandelnden Gutes durch das Kamin fallen gelassen werden oder darin eine Wirbelschicht bilden.

Die vom Empfänger aufgenommene Energie kann auch in mechanische oder elektrische Energie umgesetzt werden, beispielsweise nach dem in Fig. 9 dargestellten Schema. Der Kanal 10 ist dort an eine ins Vakuum führende Gasturbine 60 angeschlossen. Deren Austritt ist über eine Leitung 61 mit einem Luftkühler 62 verbunden. Die dort abgekühlte Luft von unteratmosphärischem Druck gelangt sodann über eine Leitung 63 in einen Verdichter 64, dessen Austritt mit einem Kamin 65 verbunden ist. Gasturbine 60 und Verdichter 64 sind auf einer gemeinsamen Welle angeordnet, auf der ein Generator 66 sitzt. Der Luftkühler 62 ist so plaziert, daß die darin erwärmte Kühlluft mindestens teilweise dem Eintritt des Kanals 10 zuströmt.

Statt dem Kamin 65 kann die verdichtete Luft auch dem Eintritt des Kanals 10 zugeführt werden. Die Abwärme der verdichteten Luft läßt sich gegebenenfalls auch als Prozeßwärme nutzen.

## Patentansprüche

1. Empfänger zum Umsetzen der Energie konzentrierter Sonnenstrahlung, mit einem am oberen Ende eines Turmes befindlichen, quer zur Turmachse gerichteten Kanal, in dem eine der Strahlung ausgesetzte Struktur aus Absorbermaterial angeordnet ist und der mit Mitteln verbunden ist, die Luft als Kühlmedium durch die Struktur hindurchfördern, dadurch gekennzeichnet, daß die im Kanaleingang angeordnete Absorberstruktur aus lockerem, faserartigem Material besteht und daß über den Kanalquerschnitt verteilt Drosselmittel so angeordnet sind, daß in Bereichen größerer Strahlungsdichte größere Luftmengenströme auftreten als in Bereichen geringerer Strahlungsdichte.

2. Empfänger nach Anspruch 1, dadurch gekennzeichnet, daß als Drosselmittel eine unterschiedliche Dichte der Anordnung der Struktur des Absorbermaterials über den Kanalquerschnitt dient.

3. Empfänger nach Anspruch 1 oder 2, dadurch gekennzeichnet, daß das Absorbermaterial in Bereichen größerer Strahlungsdichte feineren Querschnitt aufweist als in Bereichen geringerer Strahlungsdichte.

4. Empfänger nach einem der Ansprüche 1 bis 3, dadurch gekennzeichnet, daß der Kanal durch in Richtung der Luftströmung verlaufende Wände unterteilt ist und in mindestens einem Teil der so gebildeten Teilkanäle im Strahlungsschatten der Struktur einstellbare Drosselorgane angeordnet sind.

5. Empfänger nach Anspruch 4, dadurch gekennzeichnet, daß zum Messen der Lufttemperatur hinter der Struktur den Teilkanälen Temperaturfühler zugeordnet sind, die die Drosselorgane so einstellen, daß die Lufttemperaturen in den Teilkanälen auf einen gemeinsamen Sollwert geregelt werden.

6. Empfänger nach Anspruch 5, dadurch gekennzeichnet, daß die Regelschaltung so gewählt ist, daß stets mindestens eines der Drosselorgane voll offen steht.

7. Empfänger nach einem der Ansprüche 1 bis 6, dadurch gekennzeichnet, daß im Kanal Leitwände so vorgesehen sind, daß die Luftströmung im Peripherbereich erhebliche, bezüglich des Kanals radial gegen innen gerichtete Geschwindigkeitskomponenten aufweist.

## Claims

1. A receiver for converting the energy from concentrated solar radiation, with a duct which is situated at the upper end of a tower and is transverse relative to the tower axis and in which a structure of absorbing material exposed to the radiation is disposed, the duct being connected to means for feeding air as coolant to the structure, characterised in that the absorbing structure, which is disposed in the duct inlet, is of loose fibrous material, and throttling means distributed over the duct cross-section are so arranged that in regions of higher radiation density higher rates of air flow occur than in regions of lower radiation density.

2. A receiver as claimed in claim 1, characterised in that the throttling means comprises a variable density of the disposition of the structure of absorbing material over the duct cross-section.

3. A receiver as claimed in claim 1 or 2, characterised in that the absorbing material has a finer cross-section in regions of higher radiation density than in regions of lower radiation density.

4. A receiver as claimed in any of claims 1 to 3, characterised in that the duct is subdivided by walls running in the same direction as the air flow, and in at least some of the duct portions so formed adjustable throttling members are disposed in the radiation shadow of the structure.

5. A receiver as claimed in claim 4, characterised in that, to measure the air temperature behind the structure, the duct portions have associated temperature sensors which set the throttling members so that the air temperatures in the duct portions are regulated to a common desired value.

6. A receiver as claimed in claim 5, characterised in that the control circuit is so selected that at least one of the throttling members is always fully open.

7. A receiver as claimed in any of claims 1 to 6, characterised that in the duct there are deflector walls so arranged that the air flow in the peripheral zone exhibits considerable velocity components directed radially inwards relative to the duct.

## Revendications

1. Récepteur pour la transformation de l'énergie d'un rayonnement solaire concentré, présentant un canal agencé au sommet d'une tour et orienté perpendiculairement à l'axe de cette tour, ce canal comportant intérieurement une structure en matériau absorbeur exposée au rayonnement et étant relié à des moyens assurant la circulation de l'air, utilisé comme milieu de refroidissement, à travers cette structure, caractérisé en ce que la structure de l'absorbeur disposée à l'entrée du canal est constituée par un matériau de type fibreux peu serré, et en ce que des moyens d'étranglement répartis sur la section du canal sont agencés de façon que les débits d'air dans les zones de plus grandes densités de rayonnement soient plus grands que dans les zones de plus faibles densités de rayonnement.

2. Récepteur selon la revendication 1, caractérisé en ce qu'on utilise comme moyen d'étranglement une densité variable de la disposition de la structure du matériau absorbeur sur la section du canal.

3. Récepteur selon la revendication 1 ou 2, caractérisé en ce que le matériau absorbeur présente, dans les zones de plus grandes densités de rayonnement, une section plus fine que dans les zones de plus faibles densités de rayonnement.

4. Récepteur selon l'une des revendications 1 à 3, caractérisé en ce que le canal est subdivisé par des parois s'étendant dans le sens de l'écoulement de l'air, et en ce que dans au moins une partie des canaux partiels ainsi formés, des organes d'étranglement réglables sont disposés dans l'ombre de rayonnement de la structure.

5. Récepteur selon la revendication 4, caractérisé en ce qu'il est prévu pour la mesure de la température de l'air à l'arrière de la structure, des capteurs de température associés aux canaux partiels et réglant les organes d'étranglement de telle façon que les températures de l'air dans les canaux partiels soient réglées à une valeur de consigne commune.

6. Récepteur selon la revendication 5, caractérisé en ce que le circuit de réglage est sélectionné de façon qu'au moins l'un des organes d'étranglement soit grand ouvert en permanence.

7. Récepteur selon l'une des revendications 1 à 6, caractérisé en ce que des parois déflectrices sont prévues dans le canal, de telle façon que l'écoulement de l'air dans la zone périphérique présente des composantes de vitesse très élevées, dirigées radialement vers l'intérieur par rapport au canal.

Fig. 1

Fig. 2

Fig. 3

Fig. 4

Fig. 5

Fig. 6

Fig. 7

Fig. 8

Fig. 9